# EUROPÄISCHE PATENTSCHRIFT

(11) **EP 1 924 609 B1**
(45) Veröffentlichungstag und Bekanntmachung des Hinweises auf die Patenterteilung: **22.12.2010**
(21) Anmeldenummer: 06792969.5
(22) Anmeldetag: 23.08.2006
(51) Int. Cl.: C08F 2/00, C08K 5/00, C08F 4/40, A61L 15/24, A61L 15/60, B01J 14/00, B01J 19/00, C08F 2/10, C08K 5/1535, C08F 20/06

(54) **VERFAHREN ZUR HERSTELLUNG WASSERABSORBIERENDER POLYMERE**
METHOD FOR PRODUCING WATER-ABSORBING POLYMERS
PROCÉDÉ DE PRODUCTION DE POLYMÈRES HYDRO-ABSORBANTS

(30) Priorität: 02.09.2005 DE 102005042038
(43) Veröffentlichungstag der Anmeldung: 28.05.2008
(73) Patentinhaber: BASF SE, 67056 Ludwigshafen (DE)
(72) Erfinder: FUNK, Rüdiger, 65527 Niedernhausen (DE); WEISMANTEL, Matthias, 63637 Jossgrund (DE); STUEVEN, Uwe, 65812 Bad Soden (DE)
(86) Internationale Anmeldenummer: PCT/EP2006/065588
(87) Internationale Veröffentlichungsnummer: WO 2007/025921

(56) Entgegenhaltungen:
- EP-A- 1 418 000
- JP-A- 2002 370 025
- FRIED: "Stabilisierung von Acrylmonomeren" FARBE+LACK, no. 8, 1994, page 614, ISSN: 0014-7699

## Beschreibung

Die vorliegende Erfindung betrifft ein Verfahren zur Herstellung wasserabsorbierender Polymere durch Polymerisation einer Monomerlösung, wobei der Sauerstoffgehalt der Monomerlösung vor der Polymerisation durch Zusatz mindestens eines Reduktionsmittels gesenkt wurde.

Wasserabsorbierende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Herstellung der wasserabsorbierenden Polymere wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Wasserabsorbierende Polymere werden üblicherweise durch radikalische Polymerisation von Monomerlösungen, beispielsweise auf Basis teilneutralisierter Acrylsäure, hergestellt. Sauerstoff inhibiert radikalische Polymerisationen und wird daher meistens vor der Polymerisation weitgehend entfernt.

Bekannt sind Verfahren zur physikalischen Sauerstoffentfernung, bei denen gelöster Sauerstoff mittels eines Inertgases aus der Monomerlösung verdrängt wird. Bei der sogenannten Inertisierung wird das Inertgas meist im Gegenstrom durch die Monomerlösung geleitet. Eine gute Durchmischung und damit optimale Inertisierung kann beispielsweise durch Verwendung von Düsen, statischen oder dynamischen Mischern sowie Blasensäulen erzielt werden. Die Polymerisation selber wird häufig ebenfalls unter Inertgas durchgeführt. Die Inertisierung der Monomerlösung mit Stickstoff wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seite 73, beschrieben.

DE-A-35 40 994 lehrt, die Monomerlösung und Stickstoff in einer Venturidüse im Gleichstrom innig zu mischen und dadurch den Sauerstoff aus der Monomerlösung zu entfernen. Diese Vorgehensweise hat jedoch den Nachteil, daß die Düse durch Polymerbildung sehr leicht verstopft, und die Sauerstoffentfernung dadurch störanfällig ist. Darüber hinaus ist der Inertgasverbrauch bei diesem Verfahren vergleichsweise hoch.

DE-A-199 38 574 beschreibt ein kontinuierliches Verfahren zur Entfernung von Sauerstoff aus Monomerlösungen mit einem Inertgas in einem säulenförmigen Apparat, wobei die Monomerlösung und das Inertgas den Apparat im Gegenstrom durchströmen. Das Inertgas wird am Boden des Apparates feinblasig verteilt eingetragen und am Kopf abgezogen. Der Wirkungsgrad wird durch zusätzliche Rühreinrichtungen erhöht.

Alle aus dem Stand der Technik bekannten Verfahren zur Inertisierung der Monomerlösung benötigen einen vergleichsweise hohen apparativen Aufwand. Darüber hinaus bedarf es noch einer Abgasleitung, die das Gasgemisch kontinuierlich abführt. Neben dem hohen apparativen Aufwand stellt die erforderliche Inertgasmenge einen Kostenfaktor dar. Nachteilig erweist sich auch die Störanfälligkeit der Apparatur, da es durch die Entfernung des Sauerstoffs leicht zur vorzeitigen Polymerisation kommt.

In WO-A-03/051415 wird eine Inertisierung durch thermische Behandlung beschrieben, wobei die Monomerlösung auf mindestens 40 °C erwärmt wird. In einer bevorzugten Ausführungsform wird die Neutralisationswärme zur Erwärmung der Monomerlösung genutzt. Da die erwärmte und inertisierte Monomerlösung spontan polymerisiert, müssen die Komponenten der Monomerlösung im Polymerisationsreaktor gemischt werden. Nachteilig hierbei ist die unvollständige Vermischung bei beginnender Polymerisation.

DE-A-199 55 861 offenbart eine kontinuierliche Polymerisation, bei dem eine Monomerlösung inertisiert und im Polymerisationsreaktor mit der Initiatorlösung versetzt wird. Dabei werden Reduktionsmittel und Oxidationsmittel des verwendeten Redoxinitiatorsystems als getrennte Lösungen dosiert.

JP-A-2002/370025 beschreibt ein Sprühpolymerisationsverfahren unter Verwendung eines Redox-Initiators, wobei zwei Monomerlösungen im Polymerisationsreaktor gemischt werden. Die erste Monomerlösung enthält ein Oxidationsmittel und die zweite Monomerlösung enthält ein Reduktionsmittel.

EP-A-1 418 000 offenbart ein Polymerisationsverfahren, bei dem der Initiator in turbulenter Strömung zugesetzt wird. Es können auch Redox-Initiatoren eingesetzt werden, wobei die einzelnen Komponenten in beliebiger Reihefolge zugesetzt werden können.

Aufgabe der vorliegenden Erfindung war die Bereitstellung eines Verfahrens zur Herstellung wasserabsorbierender Polymere, insbesondere ein vereinfachtes Verfahren zur Inertisierung der Monomerlösung.

Gelöst wurde die Aufgabe durch Verfahren zur Herstellung wasserabsorbierender Polymere durch Polymerisation einer Monomerlösung, wobei der Sauerstoffgehalt der Monomerlösung vor der Polymerisation durch Zusatz mindestens eines Reduktionsmittels gesenkt wird.

Der Sauerstoffgehalt der Monomerlösung beträgt vor Zusatz des Reduktionsmittels 5 bis 30 Gew.-ppm und nach Zusatz des Reduktionsmittels und vor der Polymerisation höchstens 4 Gew.-ppm, vorzugsweise höchstens 2 Gew.-ppm, besonders bevorzugt höchstens 1 Gew.-ppm, ganz besonders bevorzugt höchstens 0,5 Gew.-ppm.

Die Reduktionsmittel müssen unter den gegebenen Bedingungen mit dem gelösten Sauerstoff der Monomerlösung reagieren können und unterliegen keiner weiteren Beschränkung. Geeignete Reduktionsmittel sind beispielsweise Reduktionsmittel, die auch als reduzierende Komponente in Redoxinitiatorsystemen verwendet werden, wie Ascorbinsäure, Glukose, Sorbose, Ammonium- oder Alkalimetallhydrogensulfit, -sulfit, -thiosulfat, -hyposulfit, -pyrosulfit, -sulfid oder Natriumhydroxymethylsulfoxylat. Vorzugsweise verwendet man Ascorbinsäure oder Natriumpyrosulfit als Reduktionsmittel.

Zur chemischen Sauerstoffentfernung werden die Reduktionsmittel vor der Polymerisation der Monomerlösung zugesetzt. Vor der Polymerisation bedeutet beispielsweise, im Falle einer Redoxpolymerisation, vor Zusatz der oxidierenden Komponente, im Falle einer Photopolymerisation, vor der Bestrahlung und, im Falle einer thermischen Polymerisation, vor der Erwärmung. Werden unterschiedliche Initiatorsysteme eingesetzt, so bedeutet vor der Polymerisation vor der Initiierung des ersten Initiatorsystems.

Die Menge an Reduktionsmittel, die im erfindungsgemäßen Verfahren vorteilhaft eingesetzt wird, hängt einerseits von der Menge an gelöstem Sauerstoff und andererseits vom eingesetzten Initiatorsystem.

Soll nur der Sauerstoffgehalt der Monomerlösung gesenkt werden, so werden typischerweise mindestens 50 mol-%, vorzugsweise mindestens 75 mol-%, besonders bevorzugt mindestens 90 mol-%, und typischerweise bis zu 150 mol-%, vorzugsweise bis zu 125 mol-%, ganz besonders bevorzugt bis zu 110 mol-%, Reduktionsmittel eingesetzt, jeweils bezogen auf den gelösten Sauerstoff.

Die Polymerisation sollte erst gestartet werden, wenn der Sauerstoffgehalt der Monomerlösung auf den gewünschten Wert gefallen ist. Üblicherweise sind hierfür 20 Minuten ausreichend.

Selbstverständlich ist das erfindungsgemäße Verfahren auch geeignet eine übliche physikalische Sauerstoffentfernung zu unterstützen. Dadurch kann die Sauerstoffentfernung beschleunigt und der Inertgasbedarf gesenkt werden. Der Bedarf an Redukti onsmittel und die Reaktionszeiten können in diesem Fall entsprechend den Erfordernissen gegebenenfalls nach unten angepasst werden.

In einer bevorzugten Ausführungsform der vorliegenden Erfindung wird die Polymerisation durch ein Redoxinitiatorsystem gestartet. In diesem Fall ist es günstig das zur Sauerstoffentfernung verwendete Reduktionsmittel im Überschuß zu verwenden und gleichzeitig als reduzierende Komponente bei der Redoxpolymerisation zu verwenden.

Geeignete oxidierende Komponenten der bevorzugten Redoxinitiatorsysteme sind beispielsweise Peroxide, Hydroperoxide, Wasserstoffperoxid, Persulfate.

Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butyl-per-2-ethylhexanoat, tert.-Butylperisononanoat, tert.-Butylpermaleat, tert.-Butylperbenzoat, Di-(2-ethylhexyl)peroxydicarbonat, Dicyclohexylperoxydicarbonat, Di-(4-tert.-butylcyclohexyl)peroxydicarbonat, Dimyristilperoxydicarbonat, Diacetylperoxydicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat.

Von den Oxidationsmitteln ist Natriumperoxodisulfat bevorzugt und die Kombination Wasserstoffperoxid/Natriumperoxodisulfat besonders bevorzugt.

Vorteilhaft wird das Oxidationsmittel erst im Polymerisationsreaktor zugesetzt.

Die Polymerisationsreaktoren, die für die Polymerisation eingesetzt werden können, unterliegen keiner Beschränkung. Das erfindungsgemäße Verfahren kann diskontinuierlich oder kontinuierlich durchgeführt werden. Kontinuierliche mehrwellige, vorzugsweise zweiwellige, Kneter mit achsparalleler Strömung sind bevorzugt.

Die wasserabsorbierenden Polymere werden beispielsweise durch Polymerisation einer Monomerlösung, enthaltend
a) mindestens ein ethylenisch ungesättigtes, säuregruppentragendes Monomer,
b) mindestens einen Vernetzer,
c) gegebenenfalls ein oder mehrere mit dem Monomeren a) copolymerisierbare ethylenisch und/oder allylisch ungesättigte Monomere und
d) gegebenenfalls ein oder mehrere wasserlösliche Polymere, auf die die Monomere a), b) und ggf. c) zumindest teilweise aufgepfropft werden können,
erhalten.

Geeignete Monomere a) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 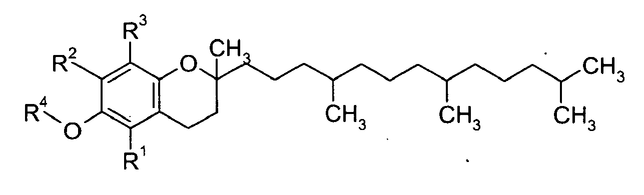 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Di- und Triacrylate, wie in EP-A-0 547 847, EP-A-0 559 476, EP-A-0 632 068, WO-A-93/21237, WO-A-03/104299, WO-A-03/104300, WO-A-03/104301 und DE-A-103 31 450 beschrieben, gemischte Acrylate, die neben Acrylatgruppen weitere ethylenisch ungesättigte Gruppen enthalten, wie in DE-A-103 31 456 und WO-A-04/013064 beschrieben, oder Vernetzermischungen, wie beispielsweise in DE-A-195 43 368, DE-A-196 46 484, WO-A-90/15830 und WO-A-02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 15-fach ethoxylierten Glyzerins, des 3- bis 15-fach ethoxylierten Trimethylolpropans, des 3- bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine wie sie beispielsweise in WO-A-03/104301 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3-bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf. Die Menge an Vernetzer b) beträgt vorzugsweise 0,01 bis 1 Gew.-%, besonders bevorzugt 0,05 bis 0,5 Gew.-%, ganz besonders bevorzugt 0,1 bis 0,3 Gew.-%, jeweils bezogen auf das Monomer a).

Mit den Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die Herstellung eines geeigneten Grundpolymers sowie weitere geeignete hydrophile ethylenisch ungesättigte Monomere d) werden in DE-A-199 41 423, EP-A-0 686 650, WO-A-01/45758 und WO-A-03/104300 beschrieben.

Wasserabsorbierende Polymere werden üblicherweise durch Polymerisation einer wässrigen Monomerlösung und gegebenenfalls einer anschließenden Zerkleinerung des Hydrogels erhalten. Geeignete Herstellverfahren sind in der Literatur beschrieben. Wasserabsorbierende Polymere können beispielsweise erhalten werden durch
- Gelpolymerisation im Batchverfahren bzw. Rohrreaktor und anschließender Zerkleinerung im Fleischwolf, Extruder oder Kneter (EP-A-0 445 619, DE-A-19 846413)
- Polymerisation im Kneter, wobei durch beispielsweise gegenläufige Rührwellen kontinuierlich zerkleinert wird, (WO-A-01/38402)
- Polymerisation auf dem Band und anschließende Zerkleinerung im Fleischwolf, Extruder oder Kneter (DE-A-38 25 366, US-6,241,928)
- Emulsionspolymerisation, wobei bereits Perlpolymerisate relativ enger Gelgrößenverteilung anfallen (EP-A-0 457 660)
- In-situ Polymerisation einer Gewebeschicht, die zumeist im kontinuierlichen Betrieb zuvor mit wässriger Monomerlösung besprüht und anschließend einer Photopolymerisation unterworfen wurde (WO-A-02/94328, WO-A-02/94329)

Die Umsetzung wird vorzugsweise in einem Kneter, wie beispielsweise in WO-A-01/38402 beschrieben, oder auf einem Bandreaktor, wie beispielsweise in EP-A-0 955 086 beschrieben, durchgeführt.

Die Säuregruppen der erhaltenen Hydrogele sind üblicherweise teilweise neutralisiert, vorzugsweise zu 25 bis 85 mol-%, bevorzugt zu 27 bis 80 mol-%, besonders bevorzugt zu 27 bis 30 mol-% oder 40 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Neutralisation kann nach der Polymerisation auf der Stufe des Hydrogels durchgeführt werden. Es ist aber auch möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Die Neutralisation der Monomerlösung auf den Endneutralisationsgrad ist bevorzugt.

Das neutralisierte Hydrogel wird dann mit einem Band- oder Walzentrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, je höher der Feststoffgehalt des Gels ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Das getrocknete Hydrogel wird vorzugsweise gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 µm, besonders bevorzugt unter 900 µm, ganz besonders bevorzugt unter 800 µm, und vorzugsweise über 100 µm, besonders bevorzugt über 150 µm, ganz besonders bevorzugt über 200 µm.

Ganz besonders bevorzugt ist eine Partikelgröße (Siebschnitt) von 106 bis 850 µm. Die Partikelgröße wird gemäß der von der EDANA (European Disposables and Nonwovens Association) empfohlenen Testmethode Nr. 420.2-02 "Particle size distribution" bestimmt.

Die Grundpolymere werden vorzugsweise anschließend oberflächennachvernetzt. Hierzu geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A-0 083 022, EP-A-543 303 und EP-A-937 736 beschrieben, di- oder polyfunktionelle Alkohole, wie in DE-C-33 14 019, DE-C-35 23 617 und EP-A-450 922 beschrieben, oder β-Hydroxyalkylamide, wie in DE-A-102 04 938 und US-6,239,230 beschrieben.

Des weiteren sind in DE-A-40 20 780 zyklische Karbonate, in DE-A-198 07 502 2-Oxazolidon und dessen Derivate, wie 2-Hydroxyethyl-2-oxazolidon, in DE-A-198 07 992 Bis- und Poly-2-oxazolidinone, in DE-A-198 54 573 2-Oxotetrahydro-1,3-oxazin und dessen Derivate, in DE-A-198 54 574 N-Acyl-2-Oxazolidone, in DE-A-102 04 937 zyklische Harnstoffe, in DE-A- 103 34 584 bizyklische Amidacetale, in EP-A-1 199 327 Oxetane und zyklische Harnstoffe und in WO-A-03/031482 Morpholin-2,3-dion und dessen Derivate als geeignete Oberflächennachvernetzer beschrieben.

Die Nachvernetzung wird üblicherweise so durchgeführt, dass eine Lösung des Oberflächennachvernetzers auf das Hydrogel oder das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Ein weiterer Gegenstand der vorliegenden Erfindung ist die Verwendung der gemäß dem erfindungsgemäßen Verfahren hergestellten wasserabsorbierenden Polymere zur Herstellung von Hygieneartikeln, insbesondere Windeln.

Das erfindungsgemäße Verfahren ermöglicht die einfache Inertisierung von Monomerlösungen vor der Polymerisation.

Die gemäß dem erfindungsgemäßen Verfahren hergestellten wasserabsorbierenden Polymere weisen gegenüber der üblichen physikalischen Sauerstoffentfernung einen niedrigeren Restmonomerengehalt und ein günstigeres Verhältnis von Zentrifugenretentionskapazität zu Extrahierbaren auf.

Wasserabsorbierende Polymere sind schwach vernetzte Polymere. Durch unerwünschte Kettenabbruchreaktionen während der Polymerisation nimmt der Anteil kurzer und damit auch unvernetzter Polymerketten (Extrahierbare) zu, das Verhältnis von Zentrifugenretentionskapazität zu Extrahierbaren wird kleiner.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Restmonomere

Der Gehalt an Restmonomeren der wasserabsorbierenden Polymerpartikel wird gemäß der von der EDANA (European Disposables and Nonwovens Association) empfohlenen Testmethode Nr. 410.2-02 "Residual monomers" bestimmt.

### Zentrifugenretentionskapazität (CRC Centrifuge Retention Capacity)

Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

### Extrahierbare

Der Anteil an Extrahierbaren in den wasserabsorbierenden Polymerpartikeln wird gemäß der von der EDANA (European Disposables and Nonwovens Association) empfohlenen Testmethode Nr. 470.2-02 "Extractables" bestimmt.

Die EDANA-Testmethoden sind beispielsweise erhältlich bei der European Disposables and Nonwovens Association, Avenue Eugène Plasky 157, B-1030 Brüssel, Belgien.

### Beispiele:

### Beispiel 1

1 kg einer 33 gew.-%igen wässrigen Acrylsäure/Natriumacrylat-Lösung mit einem Neutralisationsgrad von 71,5 mol-% wurden bei 29°C mit 9 g einer 0,5 gew.-%igen wässrigen Ascorbinsäure-Lösung versetzt. Anschließend wurde die Abnahme des Sauerstoffgehalts der Monomerlösung gemessen.

**Tab. 1: Sauerstoffgehalt**

| Reaktionszeit [Minuten] | Sauerstoffgehalt [Gew.-ppm] |
|---|---|
| 0 | 9,0 |
| 1 | 8,5 |
| 2 | 8,2 |
| 3 | 8,1 |
| 4 | 7,9 |
| 5 | 7,8 |
| 6 | 7,6 |
| 7 | 7,3 |
| 8 | 7,0 |
| 9 | 6,8 |
| 10 | 6,6 |
| 11 | 6,5 |
| 12 | 6,3 |
| 13 | 5,0 |
| 14 | 3,0 |
| 15 | 2,2 |
| 16 | 1,5 |
| 17 | 1,1 |
| 18 | 0,5 |

Die Ergebnisse zeigen, dass die Monomerlösung durch Zusatz von Ascorbinsäure inertisiert werden kann.

### Beispiel 2

1 kg einer 33 gew.-%igen wässrigen Acrylsäure/Natriumacrylat-Lösung mit einem Neutralisationsgrad von 71,5 mol-% wurden bei 29°C mit 6 g einer 0,5 gew.-%igen wässrigen Ascorbinsäure-Lösung versetzt.

Die Monomerlösung enthielt 0,4 Gew.-%, bezogen auf Acrylsäure, 15fach ethoxiliertes Trimethylolpropantriacrylat als Vernetzer.

15 Minuten nach Zugabe der Ascorbinsäure-Lösung wurde die Polymerisation durch Dosierung einer Mischung aus Wasserstoffperoxid und Natriumperoxodisulfat gestartet.

Bezogen auf Acrylsäure wurden 0,007 Gew.-% Wasserstoffperoxid (als 0,25 gew.-%ige wässrige Lösung) und 0,02 Gew.-% Natriumperoxodisulfat (als 15 gew.-%ige wässrige Lösung) verwendet. Die Initiatormischung wurde durch Mischen der beiden wässrigen Lösungen hergestellt.

Das erhaltene Produktgel wurde zerkleinert, eine Stunde bei 170°C im Umlufttrockenschrank getrocknet, gemahlen und auf 150 bis 850 µm abgesiebt.

Anschließend wurden Restmonomerengehalt, Zentrifugenretentionskapazität und Extrahierbare bestimmt. Die Ergebnisse sind in Tabelle 2 zusammengefasst. Sie zeigen, dass bei vergleichbaren sonstigen Eigenschaften mit dem erfindungsgemäßen Verfahren wasserabsorbierende Polymere mit weniger Extrahierbaren und weniger Restmonomeren erhalten werden.

### Beispiel 3

Es wurde verfahren wie unter Beispiel 2. Es wurden 7 g einer 0,5 gew.-%igen wässrigen Ascorbinsäure-Lösung eingesetzt. Die Reaktionszeit zur chemischen Sauerstoffentfernung betrug 14 Minuten.

### Beispiel 4

Es wurde verfahren wie unter Beispiel 2. Es wurden 8 g einer 0,5 gew.-%igen wässrigen Ascorbinsäure-Lösung eingesetzt. Die Reaktionszeit zur chemischen Sauerstoffentfernung betrug 15 Minuten.

### Beispiel 5

Es wurde verfahren wie unter Beispiel 2. Es wurden 9 g einer 0,5 gew.-%igen wässrigen Ascorbinsäure-Lösung eingesetzt. Die Reaktionszeit zur chemischen Sauerstoffentfernung betrug 17,5 Minuten.

### Beispiel 6

Es wurde verfahren wie unter Beispiel 2. Es wurden 9 g einer 0,5 gew.-%igen wässrigen Ascorbinsäure-Lösung eingesetzt. Die Reaktionszeit zur chemischen Sauerstoffentfernung betrug 18 Minuten.

### Beispiel 7

Es wurde verfahren wie unter Beispiel 2. Statt mit einer wässrigen Ascorbinsäure-Lösung wurde die Monomerlösung mit Stickstoff inertisiert. Dazu wurde 3 Minuten Stickstoff mit einer Menge von 25 l/h durch die Monomerlösung geleitet.

Zum Start der Polymerisation wurden zusätzlich 0,0015 Gew.-% Ascorbinsäure, bezogen auf Acrylsäure, zugesetzt. Ascorbinsäure wurde als 0,5 gew.-%ige wässrige Lösung eingesetzt.

### Beispiel 8

Es wurde verfahren wie unter Beispiel 7. Die Monomerlösung wurde 3 Minuten mit 50 l/h Stickstoff inertisiert.

### Beispiel 9

Es wurde verfahren wie unter Beispiel 7. Die Monomerlösung wurde 7 Minuten mit 10 l/h Stickstoff inertisiert.

### Beispiel 10

Es wurde verfahren wie unter Beispiel 7. Die Monomerlösung wurde 30 Minuten mit 100 l/h Stickstoff inertisiert.

**Tab. 2: Messergebnisse**

| Bsp. | Inertisierung | CRC [g/g] | Extrahierbare [Gew.-%] | Verhältnis CRC/Extrahierbare | Restmonomere [Gew.-ppm] |
|---|---|---|---|---|---|
| 2 | 30 mg Asc/15 min | 43,0 | 11,9 | 3,60 | 3600 |
| 3 | 35 mg Asc/14 min | 44,9 | 11,0 | 4,08 | 3570 |
| 4 | 40 mg Asc/15 min | 44,4 | 12,0 | 3,70 | 3670 |
| 5 | 45 mg Asc/17,5 min | 44,0 | 10,5 | 4,20 | 3610 |
| 6 | 45 mg Asc/18 min | 43,7 | 11,1 | 3,94 | 3400 |
| 7*) | 1,25 l N₂/3 min | 50,7 | 14,1 | 3,59 | 5120 |
| 8*) | 2,5 l N₂/3 min | 56,4 | 18,3 | 3,07 | 4070 |
| 9*) | 1,17 l N₂/7 min | 47,1 | 12,7 | 3,50 | 6310 |
| 10*) | 50 l N₂/30 min | 49,3 | 14,5 | 3,40 | 3850 |

| | | | | | |
|---|---|---|---|---|---|
| *) Vergleich Asc: Ascorbinsäure (chemische Inertisierung) N₂: Stickstoff (physikalische Inertisierung). | | | | | |

Die gemäß dem erfindungsgemäßen Verfahren hergestellten Polymere haben weniger Extrahierbare und weniger Restmonomer.

## Patentansprüche

1. Verfahren zur Herstellung wasserabsorbierender Polymere durch Polymerisation einer Monomerlösung, **dadurch gekennzeichnet, dass** der Sauerstoffgehalt der Monomerlösung, vor der Polymerisation durch Zusatz mindestens eines Reduktionsmittels auf höchstens 4 Gew.-ppm gesenkt wird und der Sauerstoffgehalt der Monomerlösung vor Zusatz des Reduktionsmittels 5 bis 30 Gew.-ppm beträgt.

2. Verfahren gemäß Anspruch 1, **dadurch gekennzeichnet, dass** der Sauerstoffgehalt der Monomerlösung nach dem Zusatz des mindestens einen Reduktionsmittels und vor der Polymerisation unter 1 Gew.-ppm beträgt.

3. Verfahren gemäß Anspruch 1 oder 2, **dadurch gekennzeichnet, dass** das mindestens eine Reduktionsmittel Ascorbinsäure ist.

4. Verfahren gemäß einem der Ansprüche 1 bis 3, **dadurch gekennzeichnet, dass** die Menge des mindestens einen Reduktionsmittels von 50 bis 150 mol-%, bezogen auf den in der Monomerlösung gelösten Sauerstoff, beträgt.

5. Verfahren gemäß einem der Ansprüche 1 bis 4, **dadurch gekennzeichnet, dass** die Polymerisation eine Redoxpolymerisation ist.

6. Verfahren gemäß Anspruch 5, **dadurch gekennzeichnet, dass** das Oxidationsmittel des Redoxinitiatorsystems erst im Polymerisationsreaktor zugesetzt wird.

7. Verfahren gemäß Anspruch 5 oder 6, **dadurch gekennzeichnet, dass** Natriumperoxodisulfat als Oxidationsmittel verwendet wird.

8. Verfahren gemäß einem der Ansprüche 5 bis 7, **dadurch gekennzeichnet, dass** Wasserstoffperoxid als zusätzliches Oxidationsmittel verwendet wird.

9. Verfahren gemäß einem der Ansprüche 1 bis 8, **dadurch gekennzeichnet, dass** die Monomerlösung vor der Polymerisation ausschließlich durch Zusatz von mindestens einem Reduktionsmittel inertisiert wird

## Claims

1. A process for preparing water-absorbing polymers by polymerizing a monomer solution, wherein the oxygen content of the monomer solution is lowered to at most 4 ppm by weight by addition of at least one reducing agent before the polymerization and the oxygen content of the monomer solution is from 5 to 30 ppm by weight before addition of the reducing agent.

2. The process according to claim 1, wherein the oxygen content of the monomer solution, after the addition of the at least one reducing agent and before the polymerization, is below 1 ppm by weight.

3. The process according to claim 1 or 2, wherein the at least one reducing agent is ascorbic acid.

4. The process according to any of claims 1 to 3, wherein the amount of the at least one reducing agent is from 50 to 150 mol% based on the oxygen dissolved in the monomer solution.

5. The process according to any of claims 1 to 4, wherein the polymerization is a redox polymerizetion.

6. The process according to claim 5, wherein the oxidizing agent of the redox initiator system is not added until within the polymerization reactor.

7. The process according to claim 5 or 6, wherein sodium peroxodisulfate is used as the oxidizing agent.

8. The process according to any of claims 5 to 7, wherein hydrogen peroxide is used as an additional oxidizing agent.

9. The process according to any of claims 1 to 8, wherein the monomer solution is inertized before the polymerization exclusively by addition of at least one reducing agent.

## Revendications

1. Procédé pour la préparation de polymères absorbant l'eau par polymérisation d'une solution de monomères, **caractérisé en ce que** la teneur en oxygène de la solution de monomères est abaissée avant la polymérisation, par addition d'au moins un réducteur, à au maximum 4 ppm en poids et la teneur en oxygène de la solution de monomères avant l'addition du réducteur est de 5 à 30 ppm en poids.

2. Procédé selon la revendication 1, **caractérisé en ce que** la teneur en oxygène de la solution de monomères après l'addition dudit au moins un réducteur et avant la polymérisation est inférieure à 1 ppm en poids.

3. Procédé selon la revendication 1 ou 2, **caractérisé en ce qu'**au moins un réducteur est l'acide ascorbique.

4. Procédé selon l'une quelconque des revendications 1 à 3, **caractérisé en ce que** la quantité dudit au moins un réducteur est de 50 à 150% en mole, par rapport à l'oxygène dissous dans la solution de monomères.

5. Procédé selon l'une quelconque des revendications 1 à 4, **caractérisé en ce que** la polymérisation est une polymérisation redox.

6. Procédé selon la revendication 5, **caractérisé en ce que** l'oxydant du système d'initiateur redox n'est ajouté que dans le réacteur de polymérisation.

7. Procédé selon la, revendication 5 ou 6, **caractérisé en ce qu'**on utilise du peroxodisulfate de sodium comme oxydant.

8. Procédé selon l'une quelconque des revendications 5 à 7, **caractérisé en ce que** le peroxyde d'hydrogène est utilisé comme oxydant supplémentaire.

9. Procédé selon l'une quelconque des revendications 1 à 8, **caractérisé en ce que** la solution de monomères est rendue inerte avant la polymérisation, exclusivement par l'addition d'au moins un réducteur.
